**Europäisches Patentamt**

**European Patent Office**

**Office européen des brevets**

(19)

(11) Veröffentlichungsnummer: **0 177 824**
**A2**

(12) # EUROPÄISCHE PATENTANMELDUNG

(21) Anmeldenummer: 85112035.2

(22) Anmeldetag: 23.09.85

(51) Int. Cl.⁴: **C 04 B 41/64**

(30) Priorität: 04.10.84 DE 3436382

(43) Veröffentlichungstag der Anmeldung: **16.04.86**
**Patentblatt 86/16**

(84) Benannte Vertragsstaaten: **AT BE CH DE FR GB IT LI NL**

(71) Anmelder: **BAYER AG, Konzernverwaltung RP Patentabteilung, D-5090 Leverkusen 1 Bayerwerk (DE)**

(72) Erfinder: **Gruber, Hermann, Dr., Paul-Klee-Strasse 87, D-5090 Leverkusen (DE)**
Erfinder: **Kober, Hermann, Unterscheider Weg 34, D-5060 Bergisch-Gladbach 2 (DE)**

(54) **Pastöse Imprägniermittel.**

(57) Die vorliegende Erfindung betrifft ein pastöses Hydrophobiermittel für poröse Bauteile auf Basis harzartiger Organopolysiloxane und organischem Lösungsmittel, wobei dem Hydrophobiermittel noch Schichtgittersilikate zugesetzt sind.

BAYER AKTIENGESELLSCHAFT      5090 Leverkusen, Bayerwerk

Konzernverwaltung RP

Patentabteilung      Br/ABc

## Pastöse Imprägniermittel

Die vorliegende Erfindung betrifft Imprägniermittel auf Silicon-Basis, die in pastöser Form vorliegen und nach der Verarbeitung keine sichtbaren Veränderungen auf den Oberflächen der Bauteile hinterlassen.

Wasserabweisende Imprägnierungen von Fassaden, Ziegelmauerwerk, etc. dienen zur hydrophoben Ausrüstung dieser Bauteile, die wichtige bauphysikalische Konsequenzen hat, u.a. für den Wärmehaushalt von Bauwerken. Wird das Mauerwerk durchnäßt, was bei anhaltenden Regenperioden oder bei Schlagregeneinwirkung im hohen Maße der Fall ist, dann gelten die Rechenwerte für die Wärmeleitfähigkeit von Baustoffen nicht mehr, da die hohe Wärmeleitfähigkeit des Wassers die Wärmedämmwerte herabsetzt.

Bei einem Feuchtigkeitsgehalt von 10 % steigt die Wärmeleitfähigkeit auf das Doppelte an, d.h. das wertvolle Wärmeisoliervermögen des Baumaterials geht durch aufgenommenes Wasser weitgehend verloren. Die Folge davon ist ein Mehrverbrauch an Heizmaterial, der u.U. ganz beachtlich sein kann. Zum Austrocknen der feuchten Wandbaumaterialien muß außerdem die Verdunstungswärme des

Le A 23 159-Ausland

Wassers aufgebracht werden, die der Wand entzogen wird, wodurch sich diese noch weiter abkühlt. Die Wärmeverluste, die durch Verminderung der Wärmedämmung entstehen, werden also noch erhöht durch den Verdunstungsvorgang des Wassers. Die Folge ist, daß sich die Außenwand auch in beheizten Räumen feucht und kalt anfühlt.

Ein für die Praxis brauchbares Hydrophobiermittel für Bauteile sollte daher folgende Eigenschaften aufweisen:

1. gute Penetration
2. unsichtbar
3. klebfrei auftrocknend
4. kalkbeständig
5. lange Wirksamkeit
6. durchlässig für Gase und Wasserdampf
7. einfach zu verarbeiten

Außerdem erwartet man von einem Imprägniermittel, daß sie die häufig auftretenden Folgeschäden ständiger Durchfeuchtung verhindern, wie z.B.

1. Verfärbungen oder Verschmutzungen
2. Salzausblühungen
3. Algen-, Pilz- oder Moosbefall
4. Frostschäden.

Die aufgeführten Forderungen werden heute bereits durch die von der chemischen Industrie bereitgestellten Bautenschutzmittel auf Silicon-Basis weitgehend erfüllt.

Le A 23 159

Der sehr stark wasserabweisende Charakter dieser Substanzen ist auf einen Orientierungseffekt der Siliconmoleküle auf der Oberfläche des silikatischen Baustoffes zurückzuführen. Dabei findet eine Ausrichtung des extrem dünnen Siliconbelages in der Weise statt, daß sich der silicatähnliche Teil des Siliconmoleküls außerordentlich fest auf dem Untergrund verankert, während die wasserabstoßenden oder "hydrophoben" Reste von der Oberfläche des Baustoffes abgekehrt, also nach außen angeordnet werden und so das Material mit wasserabstoßenden "Außenhaut" belegen. Dadurch wird die Grenzflächenspannung des siliconbehandelten Untergrundes gegenüber Wasser derart erhöht, daß sich der aufgebrachte Wassertropfen dem Kontakt mit der Oberfläche des Materials zu entziehen sucht. Im Gegensatz zu der Oberfläche eines benetzbaren oder "hydrophilen" Materials, auf dem sich der Wassertropfen ausbreitet, zieht er sich auf dem siliconisierten, nicht benetzbaren oder "hydrophoben" Baustoff unter Ausbildung eines möglichst großen Randwinkels zusammen und perlt ab.

Die für Hydrophobierungen üblicherweise verwendeten Siliconharze sind überwiegend Methylsiliconharze, die nach bekannten Verfahren hergestellt werden (vgl. z.B. W. Noll, Chemie u. Techn. der Silicone, 1968, S. 523).

Weiterhin sind alkoxy-funktionelle Siliconharze-Oligomere im Einsatz. Es können auch höher alkylierte Produkte vorliegen, deren Vorteile die verbesserte Kalkresistenz ist.

Le A 23 159

Silicone sind keine "Dichtungsmittel" oder Anstrichmittel, die die Poren des Materials dicht verschließen. Silicon-Bautenschutzmittel heben die Saugfähigkeit der damit imprägnierten Materialien auf, ohne dabei die Poren des Baustoffes abzudichten. Die für Hydrophobierungen im Bauwesen verwendeten Siliconharze werden in organischen Lösemitteln gelöst und entsprechend verdünnt angewendet. Der wasserabweisende Effekt an den imprägnierten Untergründen stellt sich unmittelbar nach dem Verdunsten des Verdünners ein. Als Verdünner für die harzartigen Siliconharz-Konzentrate eignen sich gut die in der Lackindustrie gebräuchlichen Testbenzine.

Durch die Mitverwendung geeigneter polarer Lösemittel wie z.B. Alkohole, kann die Penetration der Bautenschutzmittellösung deutlich verbessert werden.

Die Wirkstoffkonzentration beträgt in der Regel zwischen 4 und 10 %. Die Verarbeitung erfolgt durch sattes Aufsprühen mittels großer Spritzdüsen bei relativ geringem Spritzdruck. Durch diese Verfahrensweise erreicht man eine hohe Eindringtiefe. Jedoch können versprühte Lösungsmittel auch angrenzende Bauteile verunreinigen und erfordern entsprechende Vorkehrungen. Z.B. müssen bei der Spritzverarbeitung Fensterflächen abgedeckt werden, da Verunreinigungen von Glasflächen durch Silikon außerordentlich störend sind und sich nur schwer entfernen lassen. Vorteilhaft wäre die Verarbeitung des Imprägniermittels in pastöser Form, da dann die Spritzverar-

Le A 23 159

beitung ersetzt werden kann durch die Verarbeitung mit Streich- und Rollgeräten. Diesem Wunsch steht die Tatsache entgegen, daß die für Anstrichstoffe gebräuchlichen Verdickungsmittel, wie z.B. hochdisperse Kieselsäuren oder Verdickungsmittel auf organischer Base, wie z.B. hydriertes Rizinusöl, die an sie gestellten Anforderungen nicht erfüllen können.

Zusätze der gebräuchlichen Verdickungsmittel ergeben nach der Verarbeitung auf dem Baustoff störende Beläge und Schleierbildungen und sind deshalb für den gewünschten Zweck nicht geeignet.

Es war daher Aufgabe der vorliegenden Erfindung, ein pastöses Imprägniermittel bereitzustellen, das die aufgeführten Nachteile nicht aufweist.

Es wurde nun überraschend gefunden, daß die störende Belags- und Schleierbildung von pastösen Silicon-Zubereitungen dann vermieden wird, wenn die zur Hydrophobierung verwendeten Imprägniermittel zusammen mit Schichtgittersilikaten, insbesondere vom Montmorillonit-Typ, zum Einsatz gelangen.

Gegenstand der vorliegenden Erfindung sind somit pastöse Hydrophobiermittel für poröse Bauteile bestehend im wesentlichen aus harzartigen Organopolysiloxanen und organischen Lösungsmitteln, welche dadurch gekennzeichnet sind, daß sie einen Gehalt an Schichtgittersilikaten aufweisen.

Le A 23 159

Gegenstand der vorliegenden Erfindung ist ferner ein Verfahren zur Hydrophobierung von Baustoffen ohne störende Schleier- und Belagsbildung, welches dadurch gekennzeichnet ist, daß man Silicon- und/oder Siloxanharze in Abmischung mit Schichtgittersilikaten, insbesondere vom Montmorillonit-Typ, verwendet.

Als Bestandteile der erfindungsgemäßen Hydrophobiermittel kommen in Frage:

1. Organopolysiloxane wie z. B. lineare oder verzweigte Organopolysiloxane, harzartige Polysiloxane sowie alkoxyfunktionelle Polysiloxane. Derartige Organopolysiloxane sind an sich bekannt (vgl. z. B. DE-PS 83 40 02, DE-PS 10 34 865, DE-PS 20 29 446, GB-PS 1 302 529, GB-PS 95 73 89, GB-PS 86 05 22 und GB-PS 714 461.

2. Organische Lösungsmittel wie z. B. Test- oder Schwerbenzine (Siedebereiche zwischen etwa 130 und 200°C), ggf. auch alkylierte aromatische Lösungsmittel, polare Gelierhilfsmittel wie z. B. Methanol, Ethanol, Aceton, Glycolether.

3. Als Schichtgittersilikate im Sinne der vorliegenden Erfindung können insbesondere Schichtgittersilikate vom Montmorillonit-Typ eingesetzt werden (vgl. z. B. Ullmann, Enc. der Techn. Chemie, 4. Auflage, Band 23, S. 312-15).

Montmorillonite sind Schichtgittersilikate, die aus zweidimensional unendlichen Makroanionen bestehen, welche
über die Kationen einer Zwischenschicht elektrostatisch
vernetzt sind. Für den Einsatz eignen sich besonders
Montmorillonite die als Kationen quaternäres Ammonium
enthalten. Die Schichten sind nicht starr verbunden,
sondern können durch reversible Einlagerung von polaren
Substanzen, z.B. Alkohole aufgequollen werden.

Die Menge des einzusetzenden Schichtgittersilikates richtet sich nach der gewünschten Konsistenz der Paste, sie
beträgt zwischen 20 und 200 %, bezogen auf den Wirkstoffanteil. Eine typische Zusammensetzung ist z.B.

| | |
|---|---|
| Silikonharz | 10,0 Gew.-Tle. |
| Lackbenzin | 79,0 Gew.-Tle. |
| Ethanol | 3,0 Gew.-Tle. |
| Montmorillonit | 8,0 Gew.-Tle. |
| | 100,0 Gew.-Tle. |

Neben der oben genannten Zusammensetzung wurden auch
Pasten formuliert, die neben Siliconharz 1 - 3 % eines
verträglichen Acrylpolymerisates auf der Basis von z.B.
Butylmethacrylat enthalten. Die so formulierten Pasten
sind besonders vorteilhaft auf großen Flächen mit der
Rolle verarbeitbar. Das Polymerisat fördert die Gleichmäßigkeit der Imprägnierung und verzögert die Verdunstung der Lösemittel.

Die vorliegende Erfindung soll anhand der folgenden Beispiele noch näher erläutert werden (%-Angaben bedeuten
jeweils Gew.-%).

Le A 23 159

## Beispiel 1

Zur Herstellung eines pastösen Siliconimprägniermittel werden 80 g eines Montmorillonites (Dichte ca. 1,8 g/cm$^3$, Schüttgewicht 400-420 g/l, Primärteilchengröße nach vollständiger Dispergierung 1-5 µm) mit 790 g Lackbenzin (Kp 140-160°C) ca. 5 Minuten bei ca. 1500 U/min. vordiserpiert. Es folgt danach die Zugabe von 100 g eines Siliconharz-Oligomers mit einem Harzgehalt von 80 % und zur optimalen Gelierung werden noch 30 % bezogen auf Montmorillonit Ethanol untergerührt.

Es entsteht eine cremige, homogene Paste, die gut mit dem Pinsel verstreichbar ist und auch mit der Rolle appliziert werden kann. Auf senkrechten Flächen tropft das pastöse Imprägniermittel bis zu einer Dicke von ca. 2 mm Naßfilm nicht ab. Nach dem Trocknen wird auf Ziegelstein eine gut wasserabweisende Oberfläche erhalten, die einheitlich aussieht und keine farblichen Veränderungen erkennen läßt.

## Beispiel 2 (Vergleich)

30 g hochdisperse Kieselsäure mit einer spezifischen Oberfläche von 380 m$^2$/g und einer mittleren Teilchengröße von 7 µm werden in 310 g Lackbenzin dispergiert. Es werden 30 g einer Lösung eines 50 %igen Siliconharzes untergerührt.

Es entsteht eine homogene Paste die beim Aufstreichen auf poröse Baustoffe sehr schnell antrocknet und weiße Verfärbungen auf der Baustoffoberfläche hinterläßt.

Le A 23 159

Beispiel 3   (Vergleich)


40 g eines organischen Verdickungsmittels auf der Basis
eines Rizinusölderivates (Dichte 1,02 g/cm$^3$) werden bei
ca. 50°C in Lackbenzin (Kp 140-160°C) dispergiert. Es
werden 50 g einer 80 %igen Lösung eines Silikonharzoligomers untergemischt.


Nach dem Erkalten entsteht eine pastöse Imprägniermittel-
Zubereitung, die nach dem Aufstrich auf verschiedene mineralische Baustoffe streifige, weiße Verfärbungen ergibt.


Beispiel 4


40 g Montmorillonit (s. Beispiel 1) werden in 395 g
Lackbenzin wie beschrieben dispergiert. Danach werden
50 g einer 50 %igen Lösung eines Siliconharzes untergerührt und 15 g Ethanol zugefügt.


Das pastöse Imprägniermittel läßt sich mit dem Pinsel
nichttropfend verarbeiten. Die auf diese Weise behandelten Oberflächen von Ziegel und Beton sind wasserabweisend. Farbveränderungen der Baustoffoberflächen sind
nicht sichtbar.


Le A 23 159

Patentansprüche

1.  Pastöses Hydrophobiermittel für poröse Bauteile bestehend im wesentlichen aus harzartigen Organopolysiloxanen und organischen Lösungsmitteln, gekennzeichnet durch einen Gehalt an Schichtgittersilikaten.

2.  Pastöses Hydrophobiermittel gemäß Anspruch 1, dadurch gekennzeichnet, daß das Schichtgittersilikat Montmorillonit ist.

3.  Pastöse Hydrophobiermittel gemäß Anspruch 1, dadurch gekennzeichnet, daß es aus

    | | |
    |---|---|
    | 4 - 15 | Gew.-Tl. harzartigem Polysiloxan, |
    | 94 - 70 | Gew.-Tl. Lösungsmittel und |
    | 2 - 15 | Gew.-Tl. Montmorillonit |

    besteht.

4.  Verfahren zur Hydrophobierung von porösen Bauteilen, dadurch gekennzeichnet, daß man auf die Bauteile ein Hydrophobiermittel gemäß einem der Ansprüche 1 bis 3 aufbringt.

Le A 23 159